# EUROPÄISCHE PATENTANMELDUNG

(11) **EP 1 783 441 A2**
(43) Veröffentlichungstag der Anmeldung: **09.05.2007**
(21) Anmeldenummer: 06021398.0
(22) Anmeldetag: 12.10.2006
(51) Int. Cl.: F24J 3/08, F28F 21/06

(54) **Erdwärmetauscher und Anordnung aus Erdwärmetauschern**

(30) Priorität: 07.11.2005 DE 102005053364
(71) Anmelder: Behlendorf, Gunter, 38527 Meine (DE); Weiberg, Martin, 38527 Meine (DE)
(72) Erfinder: Behlendorf, Gunter, 38527 Meine (DE); Welberg, Martin, 38527 Meine (DE)
(74) Vertreter: Einsel, Martin

(57) **Zusammenfassung**

Ein Erdwärrnetauscher besitzt eine rohrartige Leitung (10). Ein erster Anschluss (11) dient zum Zuführen eines Fluides in die rohrartige Leitung (10). Ein zweiter Anschluss (12) dient zum Abgeben des Fluides am anderen Ende der rohrartigen Leitung (10). Ein erster Abschnitt (13) der rohrartigen Leitung (10) führt das Fluid vom ersten Anschluss (11) nach unten. Ein zweiter Abschnitt (14) der rohrartigen Leitung (10) führt das Fluid nach oben zum zweiten Anschluss (12). Zumindest einer der beiden Abschnitte (13, 14) ist Ober einen Teil seiner Länge mit spiralförmigen Windungen (20) ausgerüstet.

## Beschreibung

Die Erfindung betrifft einen Erdwärmetauscher, mit einer rohrartigen Leitung mit einem ersten Anschluss zum Zuführen eines Fluides in die rohrartige Leitung, mit einem zweiten Anschluss zum Abgeben des Fluides am anderen Ende der rohrartigen Leitung, mit einem ersten, das Fluid vom ersten Anschluss nach unten führenden Abschnitt der rohrartigen Leitung, mit einem zweiten, das Fluid nach oben zum zweiten Anschluss führenden Abschnitt der rohrartigen Leitung, wobei zumindest einer der beiden Abschnitte der rohrartigen Leitung über zumindest einen Teil seiner Länge in spiralförmigen Windungen verläuft. Die Erfindung betrifft außerdem eine Anordnung aus Erdwärmetauschern und einer Wärme-pumpe.

Im Zuge der steigenden Preise für Energie und des zunehmenden Bewusstseins für eine Nutzung von emeuerbaren Energien hat auch das Interesse an der Nutzung der Erdwärme zugenommen. Es geht dabei nicht um die Wärme aus dem tieferen Bereich des Erdinneren, sondern für den normalen Hausgebrauch, um die Nutzung der in den oberflächennahen Bereichen' der Erde enthaltenen Wärme. Diese kann gewonnen werden, indem mittels Bohrungen sogenannte Erdsonden oder Erdkollektoren in das Erdreich eingebracht werden.

Hierbei handelt es sich um Rohrleitungen, die von einem Fluid durchströmt werden. Das Fluid wird häufig als Sole bezeichnet. Es handelt sich meist um ein Gemisch aus Wasser und Frostschutzmittel. Diese Sole entzieht über die Rohrwandungen Wärme aus den diese umgebenden Erdschichten. Das strömende Fluid gibt dann nach seiner Rückkehr in den Bereich oberhalb der Erdoberfläche diese Energie wiederum an eine Wärmepumpe ab, die dann einen der Haushalte versorgt, wo sie zu Heizungs- oder anderen Zwecken genutzt werden kann.

Die Erdsonden oder Erdkollektoren werden durch Bohrungen oder Ausschachtungen in den Erdboden eingebracht. Um eine effektive Nutzung der Erdwärme zu ermöglichen, gibt es derzeit zwei verschiedene Konzepte. Bei dem ersten Konzept werden Bohrungen von etwa 100 m Tiefe oder mehr eingebracht.

In diese Bohrungen wird ein entsprechend insgesamt 200 m langes U-Rohr eingebracht, so dass das Fluid, beispielsweise Glykol oder eine glykolhaltige Mischung, zunächst nach unten in 100 m Tiefe strömt und dann über den zweiten U-Schenkel wieder nach oben strömt. Während des gesamten Vorganges wird die Erdwärme durch Wärmetausch aufgenommen. Diese Erdwärmetauscher werden häufig als U-Rohr-Sonden oder Erdsonden bezeichnet.

Problematisch bei diesem Konzept ist, dass für Bohrungen in diesen Tiefen verschiedene Genehmigungen erforderlich sind und Spezialuntemehmen mit den Bohrungen beschäftigt werden müssen. Da bei derartig tiefen Bohrungen auch mehrere Grundwasserschichten durchstoßen werden, muss gegen eine Vermischung des Grundwassers aus den verschiedenen Schichten schon aus trinkwassergewinnungstechnischen Gründen Rechnung getragen werden. Darüber hinaus ist für die Durchführung von solch tiefen Bohrungen ein verhältnismäßig schweres Bohrgerät erforderlich. Dies führt dazu, dass bei einer nachträglichen Einbringung einer derartigen Bohrung etwa in den Gärten von bereits existierenden Wohnhäusern es häufig sehr schwierig ist, diese Bohrgeräte bis in den Garten zu bringen. Gelingt dies, führen die Aushubmengen der 100 m tiefen Bohrungen häufig zu erheblichen Ablagerungen und auch Verschmutzungen der umliegenden Gebäude und schließlich auch zu einer Zerstörung der Pflanzen-welt erheblicher Flächenbereiche in den Gärten.

Bei einer zweiten Variante, die vor allem bei Neubaugebieten eingesetzt wird, werden die Erdwärmetauscher stattdessen flach in Oberflächennähe eingesetzt, also praktisch nur in das obere Erdreich bis zu einer Tiefe von 1,2 bis 1,5 m. Dafür müssen dort relativ große Flächen ausgehoben werden, um die Erdwärmetauscher nicht vertikal, sondern horizontal unterzubringen. Auf bis zu diesem Zeitpunkt unbebauten Grundstücken ist das möglich. Man verwendet dazu kreis-oder schneckenförmig oder mäanderförmig verlegte Kunststoffrohre. Häufig wird diese Form der Erdwärmetauscher als Erdkollektor bezeichnet.

Ein sehr aufwendiges System dieses Typs ist beispielsweise aus der EP 0 850 388 B1 bekannt. Sehr teuere und aufwendige Einrichtungen wie beispielsweise Feststoffwärmetauscher, Metallpakete oder Wärmedämmschichten und eine komplizierte Vemetzung unterhalb eines Gebäudes sind erforderlich.

Für eine nachträgliche Installation in bereits existierenden Wohngebieten ist diese Vorgehensweise sowohl wie in der EP 0 850 388 B1 als auch in anderen, flächenförmig mäandrierenden Gestaltungen praktisch ausgeschlossen.

Aus recht ,alten Druckschriften wie beispielsweise der DE 16 01 325 A1 oder der DE 80 32 916 U1 ist ein Vorschlag bekannt, im Erdreich ein Verdampferaggregat anzuordnen. Hierzu wird zwingend ein Kältemittel benötigt, um die Erdwärme zum Verdampfen einer Flüssigkeit einzusetzen. Für eine Vergrößerung der Wärmeübergarigsflächen wird ein spiralähnlicher Aufbau einer rohrartigen Leitung in einem Betonmantel eingesetzt. Der Betonmantel dient dem Abschirmen der rohrartigen Leitung gegenüber den Umgebungseinflüssen und auch zum Schutz der Umgebung gegenüber den Kältemitteln. Da die Kältemittel ganz erheblichen Bedenken gegenüber einer Beeinträchtigung der Umwelt unterliegen, werden derartige Anordnungen heutzutage kaum noch eingesetzt. Solche Systeme erhalten in der Regel keine Zulassungen durch die zuständigen Umweltschutzbehörden, insbesondere durch die für das Grundwasser zuständigen Behörden, in Deutschland etwa die kommunalen unteren Wasserbehörden.

Aus der DE 31 49 636 A1 ist ein Erdwärmetauscher aus Edelstahl bekannt, bei dem durch eine spiralförmige Ausbildung einer rohrartigen Leitung ein effektiverer Wärmeenergieaustausch stattfinden soll. Die Verwendung von Edelstahl ist zwar korrosionsverzögernd, aber in Praxis nicht brauchbar, da auch von Erdwärmetauschem heutzutage eine deutlich längere Standzeit erwartet wird. Zu bedenken ist, dass es sich hier um Heizungsanlagen handelt, die auch recht kostspielige Erdbohrarbeiten erfordern. Die DE 31 49 636 A1 schlägt eine sehr stabile Ausführung vor und rüstet die spiralförmige Ausbildung der rohrartigen Leitung mit einem Stützskelett aus, das beispielsweise beabstandete Stützringe aufweist. Diese Konstruktion ist deutlich zu aufwendig, um wirtschaftlich eingesetzt werden zu können.

Aus der EP 0 189 733 B1 ist eine Sole-Wasser-Wärme-Pumpe bekannt, die unter einem Gebäude speziell ausgebildete Pfahlgründungen einsetzt, um die Wärmeenergie aus dem Erdreich zu entnehmen. Derartige Pfahlgründungen sind sehr kostenintensiv; darüber hinaus ist eine nachträgliche Installation derartiger Wärmeaustauscher nicht möglich, da hierzu das Fundament des entsprechenden Gebäudes zerstört oder jedenfalls erheblich beeinträchtigt werden müsste.

Ähnliche Bedenken stehen einem Einsatz eines Vorschlages aus der DE 39 13 429 A1 entgegen. Hier wird in der Praxis geothermische Energie dadurch nutzbar gemacht, dass bei der Neuerstellung von großen Gebäuden bei entsprechender rechtzeitiger planerischer Berücksichtigung Betonteile im Erdboden eingebracht werden. Dann entfallen zusätzliche Kosten für die Erstellung von Bohrlöchern, da diese Pfahlgründungen ohnehin bei den Fundamentarbeiten durchgeführt werden können. Hierzu werden entsprechend große Baumaschinen benötigt, was nur auf sehr großen Grundstücken denkbar ist. Eine nachträgliche Einbringung derartiger Systeme ist praktisch ausgeschlossen. Andere Anwendungsfälle dieser Konzeption aus der DE 39 13 429 A1 kommen aus wirtschaft, lichen Gründen nicht in Betracht.

Die DE 198 56 633 A1 schlägt korrosionsbeständige Kunststoffrohre als Rohrleitung vor, nämlich Rohre aus PVC, PE und Polybuthylen. Diese Werkstoffe sind nur für den sehr oberflächennahen Bereich einsetzbar, da sie sich schon bei relativ geringen Tiefen aufgrund des Erddruckes nachteilig verändern. Die Molekularstruktur derartiger "weicher" Rohrmaterialien verändert sich und kann im Extremfall zu Rissbildungen und damit zu Undichtigkeiten führen.

Um überhaupt bei der nur sehr flachen, oberflächennahen Ausführung bis zu 4 m Tiefe dieser Konzepte Wärme gewinnen zu können, müssten die entsprechenden Erdwärmeaustauscher sehr nah zueinander angeordnet werden; bei der in der DE 198 56 633 A1 selbst vorgeschlagenen Wahl eines Abstandes von zwei Metern entziehen sich die Sonden allerdings bereits gegenseitig in erheblichem Umfang die Energie. Ein wirtschaftlicher Einsatz einer erforderlichen emormen Anzahl von derartigen Sonden und der damit verbundenen Fläche scheint praktisch ausgeschlossen. Die hohe Entzugsleistung der einzelnen Sonde dürfte auch sehr schnell zu einem Vereisen der gesamten Sonde führen, so dass ein wirtschaftlicher Betrieb über die gesamte Dauer einer Heizperiode nicht gewährleistet ist. Es muss mit einem Elektroheizstab erheblich zusätzlich geheizt werden.

Keiner dieser Vorschläge hat sich in der Praxis durchgesetzt oder zu wirtschaftlich nutzbaren Entwicklungen geführt. In der Praxis gibt es nach wie vor nur Konzepte mit Tiefbohrungen oder großflächigen Flachbohrungen mit horizontaler Unterbringung der Erdwärmetauscher.

Wünschenswert wäre es, wenn die umweltfreundliche Möglichkeit der Wärmegewinnung über Erdkollektoren mit weniger Aufwand möglich wäre.

Diese Aufgabe wird gelöst, indem bei einem gattungsgemäßen Erdwärmetauscher die rohrartige Leitung aus einem plastisch verformbaren Material besteht, das eine variable und manuell einstellbare Verstellung des Abstandes der spiralförmigen Windungen in Achsrichtung voneinander erlaubt.

Mit einer derartigen Konzeption wird überraschend die Problemstellung gelöst. Während bisher entweder auf Neubaugrundstücken große Flächen abgeräumt und mit bodennahen Rohren belegt werden mussten oder alternativ Bohrungen in große Tiefe mit entsprechend hohen Kosten, mit großem Aufwand und auch mit entsprechenden Schäden an der Umgebung vorgenommen werden mussten, ist jetzt beides nicht mehr erforderlich. Die erfindungsgemäßen Erdwärmetauscher können jetzt nämlich in Bohrungen vergleichsweise geringer Tiefe untergebracht werden, die darüber hinaus auch nur wenig Fläche einnehmen und damit nachträglich auch zwischen bereits vorhandener Bebauung noch eingebracht werden können. Darüber hinaus ist für die Installation der erfindungsgemäßen Erdwärmetauscher auch kein für Tiefbohrungen geeignetes Bohrgerät mehr erforderlich, sondern es genügen kleinere, leistungsschwächere und leichtere Bohrgeräte. Diese leichteren Bohrgeräte sind nun problemlos auch zwischen vorhandenen Gebäuden und in bereits mit Gartenanlagen versehenen Flächen noch transportierbar und einsetzbar, wobei sie außerdem auch nur im Verhältnis geringe Belastungen für die umgebenden Pflanzungen und Gebäude darstellen.

Trotzdem sind die erfindungsgemäßen Erdwärmetauscher in gleichem Maße wie beide Varianten aus dem Stand der Technik in der Lage, die unterhalb der Erdoberfläche vorhandene Energie der Nutzung zuzuführen. Durch die spiralförmigen Windungen und den vergleichsweise größeren Abstand der Windungen von der Rückführleitung verglichen mit der U-förmigen Konzeption aus dem Stand der Technik wird die für den Wärmeaustausch zur Verfügung stehende Tauscherfläche erhöht.

Erste Tests zeigten, dass ungefähr ≥30 % mehr Energieaufnahme bei gleicher Gesamtbohrtiefe möglich sind, oder anders ausgedrückt, benötigt man gegenüber einer notwendigen Bohrtiefe von 100 m für eine U-förmige Erdsonde bei dem erfindungsgemäßen Wärmeaustausch nur 5 nebeneinander angeordnete Bohrungen a 15 m, zusammen also 75 m Bohrtiefe.

Im Vergleich zu einer große Flächen einnehmenden, nur flach angebrachten Wärmekollektoranordnung wird nur eine vergleichsweise kleine Fläche benötigt, um den gleichen Wärmeaustausch vorzunehmen.

Die Bohrungen benötigen nur einen Durchmesser, der geringfügig über den Durchmesser der spiralförmigen Windungen hinausgeht, so dass ein Einführen der Erdwärmetauscher in die Bohrungen dadurch mögliCh wird.

Bevorzugt besteht ein solcher Erdwärmetauscher aus einem Mehrschicht-Verbundrohr, etwa mit einem Durchmesser von 18 mm und einer Wandstärke von 2 mm. Denkbar sind aber auch andere Durchmessergrößen, wie beispielsweise 14 mm, 16 mm, 20 mm, 25 mm oder 32 mm. Möglich sind auch Erdwärmetauscher aus einem ummantelten Kupferrohr, Durchmesser sind dann zum Beispiel 12 mm, 15 mm, 16 mm, 22 mm und 28 mm.

Besonders bevorzugt ist es, wenn die rohrartige Leitung aus einem 5-Schicht-Verbundrohr aufgebaut ist, bei dem die mittlere der fünf Schichten aus Aluminium besteht, bei dem die jeweils außenliegenden beiden Schichten aus einem korrosionsfesten Kunststoff bestehen, und bei dem die zwischen den äußeren und der mittleren Schicht liegenden beiden Schichten Verbindungsschichten sind.

Dieses Material ist einerseits hinreichend stabil, um auch den Drücken und Kräften widerstehen zu können, die in Tiefen unterhalb der Erdoberfläche von etwa 10 bis 30 Metern auftreten können. Es ist also nicht mit Rissbildungen oder Korrosionen zu rechnen, auch nicht über einen mehrere Jahrzehnte dauernden Zeitraum.

Besonders kostengünstig wird eine solche Konzeption dann, wenn die rohrartige Leitung aus dem 5-Schicht-Verbundrohr zumindest abschnittsweise aus einem sonst für Trinkwasserinstallationsleitungen verwendeten Rohr aufgebaut ist.

Derartige Leitungen stehen vergleichsweise kostengünstig und in beliebiger Länge zur Verfügung. Zwar ist für den Erdwärmeaustauscher eine Trinkwasserqualität der eingesetzten Flüssigkeit weder erforderlich noch gewünscht, die angebotenen rohrartigen Leitungen erfüllen jedoch die hier interessanten Forderungen von Korrosionsbeständigkeit, Umweltfreundlichkeit und Stabilität sowie zugleich wie erfindungsgemäß gefordert der plastischen Verformbarkeit derart, dass die spiralförmigen Windungen in Achsrichtung der Spirale auseinandergezogen oder zusammengeschoben werden können und dann in der jeweils gewünschten Stellung verbleiben.

Die Plastizität des Materials der Erdwärmetauscher ermöglicht entscheidende Verbesserungen. So wird im Regelfall während des Bohrvorganges zum Herstellen des Bohrloches vor der Abteufung des Erdwärmetauschers in das Erdreich auch festgestellt, wo sich grundwasserführende Schichten befinden. In diesen grundwasserführenden Schichten ist im Regelfall der Wärmeaustausch besonders gut möglich, da hier eine besonders gute Wärmeleitung vorliegt. Dies ist also die energiereichste Schicht, aus der eine überproportionale Energieaufnahme möglich wäre. Dieser Effekt kann mit herkömmlichen Erdsonden oder Erdkollektoren nicht genutzt werden.

Mit Erdwärmetauschern gemäß der Erfindung lässt sich jedoch nach der Feststellung, in welcher Tiefe sich eine solche interessante, grundwasserführende Schicht befindet, manuell der Abstand der einzelnen Windungen des spiralförmigen Abschnittes verändern. Man kann also manuell diejenigen Windungen zusammenziehen und ihren Abstand voneinander in Achsrichtung verringern, die gemäß den vorherigen Beobachtungen gerade im Bereich der grundwasserführenden Schicht angeordnet sein werden, wenn der Erdwärmetauscher in das Bohrloch abgesenkt wird. Die anderen, in isolierenden und weniger relevanten Schichten zur Anordnung kommenden Windungen der Spirale können dafür entsprechend auseinandergezogen werden.

Es ergibt sich also insgesamt eine Spirale mit variablem Abstand der Spiralwindungen in Axialrichtung.

Der Wärmetauscher kann bevorzugt als Rohrwendel mit einer Gesamtlänge in Axialrichtung von etwa 6 m bis 30 m vorgesehen werden. Als Abwicklung kann der Erdwärmetauscher eine Rohrlänge zwischen etwa 60 m und 150 m aufweisen. Die Länge ergibt sich aus dem Verhältnis von Rohrdurchmesser und hydraulischem Widerstand.

in einer alternativen Ausführungsform wird das Material der Mehrschicht- Verbundrohre, der ummantelten Kupferrohre oder des sonst für die Erdwärmetauscher verwendeten Werkstoffes so gewählt, dass eine knickfreie und zuverlässige plastische Verformbarkeit entsteht. Dadurch wird es dann möglich, eine insgesamt etwa 10 m oder 11 m lange spiralförmige Konzeption des Erdwärmetauschers ungefähr im mittleren Bereich einfach manuell umzubiegen, um die Transportierbarkeit der Erdwärmetauscher zu verbessern. Biegt man hier nämlich die beiden entstehenden Hälften des Erdwärmetauschers um 180 ° auseinander, so entsteht eine parallel liegende Doppelspirale mit einer Länge von ungefähr 5 m bis 6 m und eine Abmessung senkrecht dazu von größenordnungsmäßig 50 cm. Ein derartiger Erdwärmetauscher ist problemlos mit einem Lieferwagen zu transportieren, und zwar auch in einer größeren Stückzahl von beispielsweise 7, 10 oder gegebenenfalls auch 15 derartigen Erdwärmetauschem.

Vor Ort kann dann der Erdwärmetauscher wieder in seine komplette Länge von 10 m bis 11 m zurückgebogen werden, um dann ins Erdreich abgeteuft zu werden.

Bei der bevorzugten Produktionsweise liegen die einzelnen Windungen der Rohrwendel unmittelbar aneinander, so dass sich in diesem Zustand eine sehr kurze, gut zu transportierende axiale Gesamtlänge der Rohrwendel von etwa 3 m bis 4 m ergibt. Diese wird dann erst vor Ort durch Auseinanderziehen in Achsrichtung der erforderlichen Bohrlochtiefe angepasst, wobei die Gegebenheiten des umgebenden Bodenmaterials, wie noch im Folgenden erörtert, berücksichtigt werden.

Bevorzugt wird eine Produktion, bei der die gesamte Konstruktion ohne Nahtstellen auskommt.

Bei Tests hat sich bereits herausgestellt, dass die Effektivität optimal wird, wenn genau einer der beiden Abschnitte mit den spiralförmigen Windungen ausgerüstet wird und der andere innerhalb der spiralförmigen Windung wieder nach oben führt. Dadurch kann eine kontinuierliche Aufnahme von Erdwärme gewissermaßen im Gegenstromprinzip erfolgen. Eine zweite Spirale würde hier nur noch geringe Effektivität bringen, zumal bei optimaler Anordnung der Abstände zwischen den spiralförmigen Wicklungen die im Bereich des Bohrloches vorhandene Erdwärme auch optimal getauscht werden kann.

Bevorzugt wird die Anordnung der Erdwärmetauscher so vorgenommen, dass die Zufuhr des Fluides beziehungsweise der Sole über die spiralförmigen Windungen abwärts in das Erdreich hinein erfolgt. Zu berücksichtigen ist dabei, dass in der besonders relevanten Jahreszeit des Winters die Temperaturen an der Erdoberfläche am niedrigsten sind und dann mit zunehmender Tiefe zunehmen. Es ist dann sinnvoll, den nicht spiralförmig ausgebildeten Abschnitt als vertikale Leitung im Inneren der Spirale wieder aufwärts steigen zu lassen. Das Fluid beziehungsweise die Sole hat dann in den unteren Bereichen der Spirale bis hin zum Umkehrpunkt die optimale Wärmeaufnahme durch das langsame, in den Spiralen verlaufende Passieren dieser Erdschichten hinter sich und steigt dann auf möglichst kurzem Wege durch den aufwärts steigenden Zweig durch die zum Erdboden hin wieder kühler werdenden Erdschichten auf. Da dieser Weg nur kurz ist, geht von der gewonnenen Wärme praktisch nichts verloren. Dies gilt besonders dann, wenn die dem Erdboden benachbarten, besonders weit oben liegenden Schichten von isolierten Passagen durchquert werden.

Im Vergleich zu flachverlegten, herkömmlichen Erdkollektoren tritt ein weiterer Vorteil dann ein, wenn der Wärmetauscher bevorzugt jeweils einen isolierten senkrechten Vor- und Rücklauf von 2 m Länge besitzt, sodass die Energieentnahme erst ab einer Tiefe von 2 m (und tiefer) beginnt. Die Zu- beziehungsweise Verbindungsleitungen werden nur in einer Tiefe von ca. 50 cm verlegt und ebenfalls isoliert.

Wird nämlich der Erdwärmetauscher so verlegt, wird keine Wärme aus den oberen zwei Metern entnommen. Dies bedeutet, dass der für den Pflanzenwuchs insbesondere im Frühjahr wichtige, oberflächennächste Bereich nicht beeinflusst wird und hier die Regeneration am zweckmäßigsten stattfinden kann. Darüber hinaus ist gerade dieser Bereich im Winter auch besonders kalt, so dass ihm dann, wenn es erforderlich ist, auch besonders wenig Wärme durch Tausch entnommen werden kann. Durch die Isolation dieses Leitungsabschnittes kann also die Effektivität der Gesamtanlage besonders gut optimiert werden.

Versuche haben gezeigt, dass mit erfindungsgemäßen Erdwärmetauschern Kälteleistungen in der Größenordnung von 700 W pro Erdwärmetauscher relativ leicht erreicht werden können. Ein durchschnittlicher Haushalt benötigt ungefähr 5 bis 6 kW sogenannter Kälteleistung, die ungefähr 8 bis 9 kW Wärmeleistung entsprechen. Um diese Energieentnahmen aus dem Erdreich zu ermöglichen, werden mehrere erfindungsgemäße Wärmetauscher miteinander verbunden und zu einer Anordnung zusammengeschaltet. Eine derartige Anordnung aus mehreren Erdwärmetauschem lässt sich besonders einfach installieren, da das zur Einbringung der Bohrlöcher benötigte Bohrgerät dann ohnehin vor Ort ist und mehrere, in einigen Metern voneinander beabstandete Bohrungen vergleichsweise unaufwendig vornehmen kann. Jeder dieser Bohrungen wird dann einer der erfindungsgemäßen Erdwärmetauscher eingebracht und anschließend werden diese verschiedenen Anordnungen mit ihren Anschlüssen und einer vorgesehenen Wärmepumpe zusammengeschaltet. Diese entnimmt durch erneuten Wärmeaustausch der Sole die transportierte Wärme beziehungsweise Energie.

Sofern gewünscht oder für die weitere Montage sinnvoll können Abstandshalter in Form von Rohrklippschellen und / oder handelsüblichen Kabelbindem eingesetzt werden. Diese können nicht nur den Abstand der Windungen der spiralförmigen Abschnitte voneinander sicherstellen, sondern auch den Abstand der Windungen des spiralförmigen Abschnittes von dem senkrecht aufsteigenden Abschnitt und schließlich auch den Abstand der Windungen des spiralförmigen Abschnittes von der Wandung des Bohrloches selbst.

Durch letzteres kann auch eine Zentrierung des Erdwärmetauschers im Bohrloch erfolgen.

Bevorzugt werden mehrere Erdbohrungen für eine Anlage erstellt. In jeder dieser Erdbohrungen wird dann einer der Wärmetauscher im Erdreich versenkt. Die Verbindung dieser Wärmetauscher untereinander kann nach dem sogenannten Tichelmann-System oder auch als Verteilersystem miteinander erfolgen.

Der Wärmetauscher besitzt bevorzugt jeweils einen isolierten senkrechten Vor-und Rücklauf von 2 m Länge, sodass die Energieentnahme erst ab einer Tiefe von 2 m (und tiefer) beginnt. Die Zu- beziehungsweise Verbindungsleitung werden nur in einer Tiefe von ca. 50 cm verlegt und ebenfalls isoliert.

Ein weiterer Vorteil liegt auf ökologischem Gebiet. Durch derartige Erdwärmetauscher und auch herkömmliche Erdsonden und Erdkollektoren wird dem Erdreich Wärme entzogen, die auch regeneriert werden sollte. Eine solche Regeneration des Erdreiches in tieferen Schichten dauert deutlich länger. Die aus tieferen Schichten nach oben strömenden Wärme im Erdboden beträgt weniger als 0,1 W/m², so dass sie als Wärmequelle für die oberen Schichten an sich vernachlässigt werden kann. Es dauert also vergleichsweise lange, bis die von einer Erdsonde aus etwa 100 m Tiefe entnommene Energie regeneriert worden ist.

Erdwärmetauscher aus den oberen Schichten bis 15 m Tiefe entnehmen jedoch Energie, die durch Sonneneinstrahlung, Regen. Tauwasser etc. regeneriert werden kann und daher im Regelfall schon während des üblichen Schwankungsverlaufes eines Jahres natürlich ausgeglichen wird.

Besonders bevorzugt ist es, wenn die rohrartige Leitung an ihrem tiefsten, vom Erdboden am weitesten entfernten Punkt in dem Bereich, wo der erste, nach unten führende Abschnitt in den zweiten, nach oben führenden Abschnitt übergeht, mit einem zusätzlichen Gewicht ausgestattet ist.

Auf diese Weise wird es möglich, dem durch das Grundwasser im Bohrloch ausgeübten Auftriebseffekt entgegenzuwirken und zugleich die Tiefe des gebohrten Bohrloches in vollem Umfange auszunutzen, wenn die rohrartige Leitung des Erdwärmetauschers eingebracht wird.

Es hat sich dabei bewährt, wenn das Gewicht etwa 10 kg beträgt. Mit diesem relativ leichten und gut handhabbaren Gewicht lassen sich auch Ansammlungen von lockerer Erde noch durchdringen.

Besonders bevorzugt ist es dabei, wenn das Gewicht ein Gefäß besitzt, welches zur Lagerhaltung leer ist und vor Ort beim Einbringen des Erdwärmetauschers in den Boden mit Füllgut, insbesondere Sand, füllbar ist, und dass das Gefäß an der rohrartigen Leitung vor Ort anbringbar ist.

Auf diese Weise ist es möglich, die Lagerhaltung sehr zu vereinfachen. Es können entweder Gefäße benutzt werden, die sich flach zusammenfalten lassen, wie beispielsweise Säcke und Beutel, oder aber auch Gefäße, die ohnehin vor Ort am Bohrloch zur Verfügung stehen, beispielsweise Abschnitte von Kanalisationsrohren oder dergleichen.

Besonders bevorzugt ist es, wenn das Gefäß aus einem biologisch abbaubarem und das Grundwasser nicht beeinträchtigenden Werkstoff besteht.

Auf diese Weise kann berücksichtigt werden, dass das Gewicht selbst unten im Bohrloch nach dessen Verfüllung einen Widerstand gegenüber der Grundwasserströmung darstellen würde, und zwar gerade in dem Bereich, in dem das Grundwasser zur Wärmeübertragung besonders erwünscht ist. Wird hier ein biologisch abbaubares Gefäß benutzt, beispielsweise ein Jutesack oder ein Gefäß aus einem bioabbaubaren Polymerkunststoff, so löst sich das Gefäß nach kurzer Zeit auf und kann eine ungehinderte Grundwasserströmung durch den Gefäßinhalt (insbesondere natürlich Sand) gewährleisten, so dass die Grundwasserströmung die vorhandene Wärme an die rohrartige Leitung übertragen kann.

Es ist in einer weiteren Ausführungsform bevorzugt, wenn die rohrartige Leitung aus mehreren, insbesondere aus zwei oder drei, parallelen Einzelrohrleitungen besteht, die jeweils hydraulisch voneinander getrennt sind, aber gemeinsam die spiralförmigen Windungen bilden.

Mit einer derartigen Konzeption wird es möglich, dünnere Einzelrohrleitungen zu verwenden, um den gleichen Gesamtdurchfluss zu erhalten. Dies führt zwar zu einem höheren Materialverbrauch für die Rohrleitung insgesamt, hat jedoch den Vorteil, dass aufgrund der dünneren Einzelrohrleitungen der Durchmesser der spiralförmigen Windungen senkrecht zur Spiralachse reduziert werden kann. Dünnere Leitungen können in engeren Windungen verlegt werden, auch dann, wenn die Gesamtzahl der auf diese Weise zu biegenden Rohrleitungen natürlich zunimmt.

Eine geringere Abmessung der spiralförmigen Windungen senkrecht zur Achse hat den Vorteil, dass die einzelnen Bohrlöcher ebenfalls mit geringeren Abmessungen hinsichtlich ihrer Breite ausgeführt werden können, was dann auch den dabei geförderten Aushub reduziert.

Verglichen mit den weiter oben im Zusammenhang mit der Ausführungsform mit bei einer Einzelrohrleitung angegebenen Durchmessergrößen der Mehrschicht-Verbundrohre wird man solche Einzelrohrleitungen mit einem reduzierten Durchmesser von weniger als 18 mm ausführen können, da sich ja die Durchflussmengen insgesamt addieren. Dafür reduziert sich der Durchmesser der Spiralen sofern gewünscht sogar auf weniger als 10 cm.

Das Herstellen von derartigen Rohrleitungen mit mehreren Einzelrohrleitungen, insbesondere von etwa 2 oder 3 Einzelrohrleitungen, erfolgt ähnlich wie das von Rohrleitungen mit nur einer Einzelrohrleitung, nämlich durch Wicklung der entsprechenden Rohrleitungen um einen entsprechenden Wickelkern.

Die für das Herstellen der Bohrlöcher verwendeten Bohrverfahren sind nicht zwingend, verschiedene Möglichkeiten können eingesetzt werden. Ein mit Erfolg angewendetes Bohrverfahren ist das Spülbohrverfahren. Denkbar wäre auch eine verrohrte Trockenbohrung.

Eine Verfüllung des Bohrloches nach Einbringen der Erdwärmetauscher kann entweder mit dem Bohrgut erfolgen, wenn dieses geeignet ist, oder mit feinkörnigem Kies. Ein aufwendiges Verpressen oder Einschlämmen der Bohrlöcher mit Bentonit oder ähnlichen Baustoffen ist nicht erforderlich, weil die Tiefe des Bohrlochs bevorzugt nicht über die erste Grundwasserschicht hinausgehen muss, was ja gerade ein Vorteil der erfindungsgemäßen Konzeption ist.

Beim Verdichten des eingefüllten Bohrgutes ins Bohrloch hat es sich als vorteilhaft erwiesen, dazu einen elektrischen Innenvibrator zu verwenden, der ansonsten in der Betonverarbeitung verwendet wird. Durch das Verdichten mit dem Innenvibrator erhält man in der Folgezeit beim praktischen Gebrauch der Erfindung einen sehr guten Energiefluss über das Bohrgut zum Erdwärmetauscher.

Im Folgenden wird anhand der Zeichnung ein Ausführungsbeispiel der Erfindung näher beschrieben. Es zeigt:
- Figur 1:: Eine schematische Ansicht einer Anordnung mit einer Ausführungsform der erfindungsgemäßen Anordnung mit mehreren Erdwärmetauschern; und
- **Figur 2**: eine vergrößerte Darstellung eines derartigen Erdwärmetauscher.

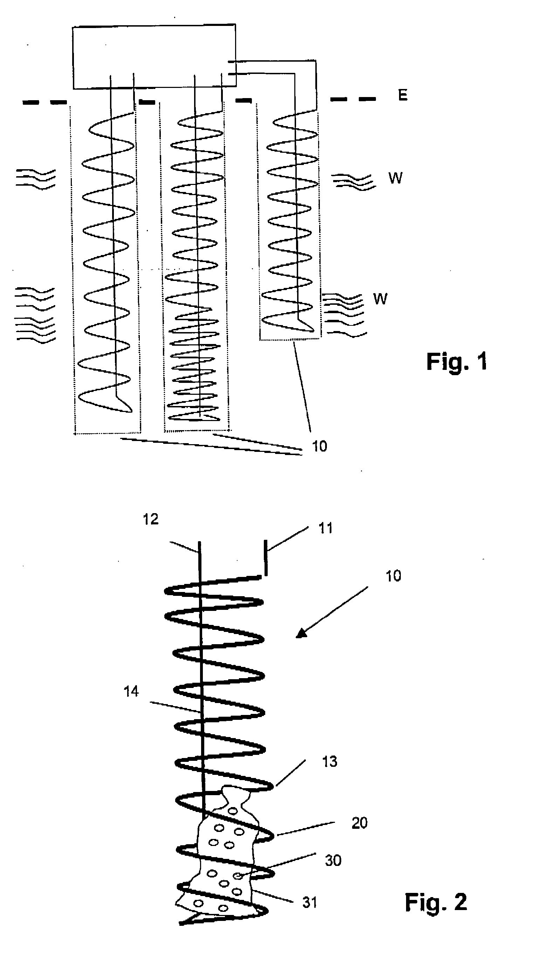

Die in der Figur 1 dargestellten Bohrungen haben eine Tiefe von ungefähr 6 m bis 90 m und einen Durchmesser von etwa 20 cm. Eine derartige Bohrung kann mit relativ kleinem Bohrgerät in den Erdboden eingebracht werden, dass sich auch über gängige Garagenzufahrten oder Fußwege zwischen Gebäuden transportieren lässt, ohne dort Schäden hervorzurufen oder größere Umbauarbeiten zu erfordern.

In diese Bohrung kann dann ein erfindungsgemäßer Erdwärmetauscher eingebracht werden. Dieser ist in der Figur 2 in näheren Einzelheiten zu erkennen.

Angedeutet ist außerdem, dass der Erdboden unter der Erdoberfläche E nicht homogen ist. Es gibt in den unterschiedlichen Tiefen Abschnitte, die relativ viel Grundwasser W führen, aber auch solche Abschnitte, die vergleichsweise trocken sind. Abschnitte, die viel Grundwasser W führen, sind besonders gut in der Lage, die in diesem Abschnitt des Erdbodens vorhandene Wärmenergie über dieses Grundwasser W zu transportieren und durch Wärmeleitung auch abzugeben, beispielsweise auch an rohrartige Leitungen 10 eines Erdwärmetauschers.

Die Erfindung macht von diesem Umstand Gebrauch, in dem sie in dem Bereich von Grundwasser G führenden Schichten auch entsprechend mehr Kontaktfläche der rohrartigen Leitungen 10 der Erdwärmetauscher bereitstellt, während sie in den weniger interessanten Abschnitten des Erdbodens zwischen den Grundwasser W führenden Leitungen weniger Kontaktfläche der Erdwärmetauscher aufweist, da diese dort nicht nur nicht benötigt ist, sondern durch die nicht sinnvoll zu nutzende Strömungslänge des Fluides in den rohrartigen Leitungen 10 kontraproduktiv wirken würde.

Dies ist im Einzelnen in der Figur 2 näher beschrieben.

Der in der Figur 2 dargestellte Erdwärmetauscher weist eine rohrartige Leitung 10 auf. Diese rohrartige Leitung 10 besitzt zwei Enden. An den Enden befindet sich jeweils ein Anschluss, nämlich ein erster Anschluss 11 zum Zuführen eines Fluids in die rohrartige Leitung 10 an einem Ende und am anderen Ende ein zweiter Anschluss 12 zum Abgeben des Fluides.

Das Fluid ist frostgeschützt bzw. besteht aus einer einen relativ tiefen Gefrierpunkt besitzenden Flüssigkeitsmischung, beispielsweise ein Frostschutzmittel wie Glycol, gemischt mit Wasser oder anderen Flüssigkeiten.

Die rohrartige Leitung 10 besitzt zwischen den beiden Anschlüssen 11 und 12 insbesondere zwei Abschnitte 13 und 14.

Ein Abschnitt 13 führt vom ersten Anschluss 11 bis zum tiefsten Punkte der rohrartigen Leitung 10 im eingebauten Zustand im Erdboden, der andere Abschnitt 14 führt von diesem Wendepunkt wieder nach oben zum zweiten Anschluss 12.

Der erste Abschnitt 13 führt in dem dargestellten Beispiel in spiralförmig verlaufenden und angeordneten Windungen 20 nach unten. Diese Windungen haben einen Durchmesser von etwa 10 cm bis 20 cm. Die Spiralachse verläuft vertikal in den Erdboden hinein. Der Abstand zwischen den Windungen beträgt größenordnungsmäßig etwa 3 cm bis 10 cm.

Vom untersten Punkt dieser rohrwendelartigen Ausgestaltung des ersten Abschnittes 13 aus führt dann der zweite Abschnitt in Achsnähe und parallel zur Achse der Spirale wieder senkrecht nach oben.

Die letzten beiden Meter benachbart zu den Anschlüssen 11 und 12 von beiden Abschnitten 13 und 14 sind jeweils isoliert gegenüber der Umgebung ausgeführt. Hier erfolgt also kein Wärmetausch.

Die rohrförmige Leitung 10 besteht also aus einem senkrecht in den Erdboden führende Zufuhrschlauch, der bis zum tiefsten Punkt der Bohrung reicht. Dort wird er umgelenkt, aber nicht wie herkömmlich in U-Form und wieder senkrecht aufsteigend, sondern in eine spiralförmige Windung, die um die senkrechte, herabführende Leitung herumgeführt ist und in möglichst gleichmäßigen und in äquidistanten Windungen angeordneten Spiralformen aufsteigt. Der Strom der Sole in der Leitung 10 erfolgt durch den spiralförmigen Abschnitt 13 und dann wieder aufwärts durch den vertikalen Abschnitt 14.

Da die erfindungsgemäße Konzeption Bohrungen von geringerer Tiefe, beispielsweise von weniger als 10 m, ermöglicht, werden die Kosten für jede einzelne Bohrung deutlich reduziert, sodass mit dem ohnehin vorgesehenen Bohrgerät dann auch mehrere Erdbohrungen in der Anlage kostengünstig und zweckmäßig getätigt werden können.

Mit diesem relativ kleinen Bohrgerät mit einem Gewicht von ca. 2 t und einer Breite von circa 90 cm ist es problemlos möglich, auch enge Passagen zu Grundstücken zu durchqueren und auch in Gartenanlagen zu arbeiten, ohne diese mehr als unbedingt nötig zu beeinträchtigen.

In einer Ausführungsform wird genutzt, dass aufgrund der relativ geringen Tiefe die Möglichkeit verrohrter Trockenbohrungen besteht. Das hat den Vorteil, dass die Hauswände oder Gartenanlagen nicht zusätzlich vor Schlammspritzem geschützt werden müssen und dass in ebenfalls kostengünstiger Weise nicht Schlammcontainer für die Spülbohrung benötigt werden, die erfahrungsgemäß beim Stand der Technik wenigstens 7 bis 8 m³ fassen müssen.

Spülbohrungen haben sich gleichwohl als sehr praktikabel herausgestellt.

Mit einer derartigen Konzeption gestalten sich die Möglichkeiten wesentlich vereinfacht. Die Wärmetauscherfläche wird bei gleicher Gesamtgröße des Erdkollektors wesentlich erhöht. Statt ein U-Rohr etwa 100 m tief in die Erde einbringen zu müssen, genügen jetzt fünf Bohrungen von etwa 15 m Tiefe, um den gleichen Wärmetauscheffekt hervorzurufen. Dazu müssen keine isolierenden Bereiche zwischen grundwasserführenden Schichten durchstoßen werden, so dass auch wasserrechtliche Probleme entfallen. Ein aufwendiges Genehmigungsverfahren bei den kommunalen Wasserbehörden ist daher nicht erforderlich.

Beim Einbau der Erdwärmetauscher mit den rohrartigen Leitungen 10 können nun die spiralförmigen Windungen 20 des ersten Abschnittes 13 manuell auseinander gezogen werden. Auf Grund der plastischen Verformbarkeit der rohrartigen Leitung 10 bleiben die spiralförmigen Windungen 20 so erhalten, wie sie manuell geformt werden.

Es ergibt sich also keine regelmäßige Spirale, sondern eine Spirale mit teilweise weiter und teilweise weniger weit auseinander gezogenen Windungen, gesehen jeweils in Achsrichtung der Spirale oder in dem dargestellten Beispiel gesehen in Längsrichtung des zweiten Abschnittes 14.

Um die rohrartige Leitung 10 in das Bohrloch herab zu führen und dabei einen Auftrieb durch Grundwasser zu vermeiden, das sich im Bohrloch sammelt, wird ein schematisch dargestelltes Gewicht 30 am unteren Ende des ersten Abschnittes 13 und des zweiten Abschnittes 14 angeordnet. Das Gewicht 30 besitzt ein Gefäß 31.

Dieses Gefäß 31 ist zur Lagerhaltung leer und kann vor Ort am Bohrloch mit Füllmaterial, beispielsweise mit ohnehin dort vorhandenem ausgehobenen Sand aus dem Bohrloch gefüllt werden. Das Gewicht des gefüllten Gefäßes 31 hält die rohrartige Leitung 10 in dem Bohrloch und sorgt dafür, dass dessen komplette Tiefe gut ausgenutzt werden kann.

Wird das Gefäß 31 aus einem biologisch abbaubarem Material gebildet, löst dieser sich nach dem Füllen des Bohrlochs im Laufe der Zeit auf und sorgt dafür, dass keine Hinderung des Grundwassers W beim Strömen um die spiralförmigen Windungen 20 der rohrartigen Leitung 10 auftritt.

### Bezugszeichenliste

- 70: rohrartige Leitung
- 11: erster Anschluss
- 12: zweiter Anschluss
- 13: erster Abschnitt
- 14: zweiter Abschnitt

- 20: spiralförmige Windungen

- 30: Gewicht
- 31: Gefäß

- E: Erdoberfläche
- W: Grundwasser

## Patentansprüche

1. Erdwärmetauscher,
mit einer rohrartigen Leitung (10),
mit einem ersten Anschluss (11) zum Zuführen eines Fluids in die rohrartige Leitung (10),
mit einem zweiten Anschluss (12) zum Abgeben des Fluids am anderen Ende der rohrartigen Leitung (10),
mit einem ersten, das Fluid vom ersten Anschluss (11) nach unten führenden Abschnitt (13) der rohrartigen Leitung (10),
mit einem zweiten, das Fluid nach oben zum zweiten Anschluss (12) führenden Abschnitt (14) der rohrartigen Leitung (10),
wobei zumindest einer der beiden Abschnitte (13, 14) der rohrartigen Leitung (10) über zumindest einen Teil seiner Länge in spiralförmigen Windungen (20) verläuft,
**dadurch gekennzeichnet,**
**dass** die rohrartige Leitung (10) aus einem plastisch verformbaren Material besteht, das eine variable und manuell einstellbare Verstellung des Abstandes der spiralförmigen Windungen (20) in Achsrichtung voneinander erlaubt.

2. Erdwärmetauscher nach Anspruch 1,
**dadurch gekennzeichnet,**
**dass** die rohrartige Leitung (10) aus einem Mehrschicht- Verbundrohr oder aus einem Kupferrohr mit Schutzmantel aufgebaut ist.

3. Erdwärmetauscher nach Anspruch 2,
**dadurch gekennzeichnet,**
**dass** die rohrartige Leitung (10) aus einem 5-Schicht-Verbundrohr aufgebaut ist,
**dass** die mittlere der fünf Schichten aus Aluminium besteht,
**dass** die jeweils außenliegenden beiden Schichten aus einem korrosionsfesten Kunststoff bestehen, und
**dass** die zwischen den äußeren und der mittleren Schicht liegenden beiden Schichten Verbindungsschichten sind.

4. Erdwärmetauscher nach Anspruch 3,
**dadurch gekennzeichnet,**
**dass** die rohrartige Leitung (10) aus dem 5-Schicht-Verbundrohr zumindest abschnittsweise aus einem sonst für Trinkwasserinstallatiansleitungen verwendeten Rohr aufgebaut ist.

5. Erdwärmetauscher nach einem der vorstehenden Ansprüche,
**dadurch gekennzeichnet,**
**dass** die rohrartige Leitung (10) aus einem Material besteht, das eine knickfreie Umbiegung des in spiralförmigen Windungen (20) verlaufenden Abschnittes (13) um 180 ° erlaubt.

6. Erdwärmetauscher nach einem der vorstehenden Ansprüche,
**dadurch gekennzeichnet,**
**dass** die rohrartige Leitung (10) an ihrem tiefsten, vom Erdboden am weitesten entfernten Punkt in dem Bereich, wo der erste, nach unten führende Abschnitt (13) In den zweiten, nach oben führenden Abschnitt (14) übergeht, mit einem zusätzlichen Gewicht (30) ausgestattet ist.

7. Erdwärmetauscher nach Anspruch 6,
**dadurch gekennzeichnet,**
**dass** das Gewicht (30) ein Gefäß (31) besitzt, welches zur Lagerhaltung leer ist und vor Ort beim Einbringen des Erdwärmetauschers in den Boden mit Füllgut, insbesondere Sand, füllbar ist, und
**dass** das Gefäß (31) an der rohrartigen Leitung (10) vor Ort anbringbar ist.

8. Erdwärmetauscher nach Anspruch 7,
**dadurch gekennzeichnet,**
**dass** das Gefäß (31) aus einem biologisch abbaubaren und das Grundwasser nicht beeinträchtigenden Werkstoff besteht.

9. Erdwärmetauscher nach einem der vorstehenden Ansprüche,
**dadurch gekennzeichnet,**
**dass** der von den untersten Bereichen des nach unten führenden Abschnittes (13) und des nach oben führenden Abschnittes (14) gebildete Umkehrbogen mit einem dem Umkehrbereich stabilisierenden Verstärkungsbogen versehen wird.

10. Erdwärmetauscher nach Anspruch 9,
**dadurch gekennzeichnet,**
**dass** der Verstärkungsbogen mit dem Gewicht (30) kombiniert wird.

11. Erdwärmetauscher nach einem der vorstehenden Ansprüche,
**dadurch gekennzeichnet,**
**dass** genau einer der beiden Abschnitte (13, 14) über den unteren, vom jeweiligen Anschluss (11, 12) am weitesten entfernten Teil seiner Länge in den spiralförmigen Windungen (20) verläuft.

12. Erdwärmetauscher nach einem der vorstehenden Ansprüche,
**dadurch gekennzeichnet,**
**dass** der Abschnitt (13, 14) über wenigstens drei Viertel seiner Länge in spiralförmigen Windungen (20) verläuft.

13. Erdwärmetauscher nach einem der vorstehenden Ansprüche,
**dadurch gekennzeichnet,**
**dass** die spiralförmigen Windungen einen Durchmesser zwischen 10 cm und 30 cm besitzen.

14. Erdwärmetauscher nach einem der vorstehenden Ansprüche,
**dadurch gekennzeichnet,**
**dass** die einzelnen der spiralförmigen Windungen voneinander einen Abstand zwischen 2 cm und 20 cm in axialer Richtung besitzen.

15. Erdwärmetauscher nach einem der vorstehenden Ansprüche,
**dadurch gekennzeichnet,**
**dass** die Achse der spiralförmigen Windungen parallel zu dem anderen Abschnitt (14, 13) oder zur Achse des anderen Abschnittes (14, 13) verläuft.

16. Erdwärmetauscher nach einem der vorstehenden Ansprüche,
**dadurch gekennzeichnet,**
**dass** der nicht in spiralförmigen Windungen verlaufende Abschnitt (14, 13) der rohrartigen Leitung (10) innerhalb der spiralförmigen Windungen (20) des anderen Abschnittes (13, 14) verläuft.

17. Erdwärmetauscher nach einem der vorstehenden Ansprüche,
**dadurch gekennzeichnet,**
**dass** benachbart zu den Anschlüssen (11, 12) der oder die Abschnitte (13, 14) der rohrartigen Leitung (10) jeweils einen isolierten senkrechten Vorund Rücklauf aufweisen.

18. Erdwärmetauscher nach einem der vorstehenden Ansprüche,
**dadurch gekennzeichnet,**
**dass** die rohrartige Leitung (10) aus mehreren, insbesondere aus zwei oder drei, parallelen Einzelrohrleitungen besteht, die jeweils hydraulisch voneinander getrennt sind, aber gemeinsam die spiralförmigen Windungen (20) bilden.

19. Erdwärmetauscher nach Anspruch 18,
**dadurch gekennzeichnet,**
**dass** die mehreren Einzelleitungen der rohrartigen Leitung (10) miteinander im Bereich des ersten Anschlusses (11) und des zweiten Anschlusses (12) verbunden sind, so dass das Fluid strömungstechnisch parallel durch die Einzelleitungen fließt.

20. Anordnung zur Gewinnung von Erdwärme durch Wärmetausch, mit mehreren Erdwärmetauschem nach einem der vorstehenden Ansprüche, und mit einer Wärmepumpe,
**dadurch gekennzeichnet,**
**dass** die Erdwärmetauscher jeweils in separaten Erdbohrungen mit senkrechter Achse angeordnet sind und
**dass** die Erdwärmetauscher untereinander als Verteilersystem oder nach dem Tichelmann-System sowie mit der Wärmepumpe verbunden sind.
